# EUROPÄISCHE PATENTSCHRIFT

(11) **EP 4 291 828 B1**
(45) Veröffentlichungstag und Bekanntmachung des Hinweises auf die Patenterteilung: **30.04.2025**
(21) Anmeldenummer: 22711004.6
(22) Anmeldetag: 03.03.2022
(51) Int. Cl.: F23D 14/56, F23N 5/24, B29C 59/08

(54) **ÜBERWACHUNG EINER BEFLAMMUNGSVORRICHTUNG**
MONITORING A FLAME TREATMENT DEVICE
SURVEILLANCE D'UN DISPOSITIF DE TRAITEMENT À LA FLAMME

(30) Priorität: 07.05.2021 DE 102021002449
(43) Veröffentlichungstag der Anmeldung: 20.12.2023
(73) Patentinhaber: Singulus Technologies AG, 63796 Kahl am Main (DE)
(72) Erfinder: BRECHTL, Giani, 63579 Freigericht (DE); RÜTH, Edgar, 63796 Kahl am Main (DE); RÜBSAM, Felix, 63619 Bad Orb (DE); HÖPFNER, Kathrin, 64850 Schaafheim (DE)
(74) Vertreter: Vossius & Partner Patentanwälte Rechtsanwälte mbB
(86) Internationale Anmeldenummer: PCT/EP2022/055475
(87) Internationale Veröffentlichungsnummer: WO 2022/233474

(56) Entgegenhaltungen:
- DE-A1- 1 646 017
- DE-A1- 102016 116 944
- US-A1- 2021 039 132

## Beschreibung

Die vorliegende Erfindung betrifft ganz allgemein die Überwachung einer Beflammunsgsvorrichtung und insbesondere eine Substratbehandlungsanlage mit einer Beflammunsgsvorrichtung sowie ersten und zweiten Substratüberwachungseinheiten.

Bei verschiedenen industriellen Prozessen kann eine Beflammung zum Einsatz kommen, bei der die Oberfläche eines Substrats für eine definierte Prozesszeit einer Gasflamme, die mit einem Sauerstoffüberschuss betrieben wird, ausgesetzt wird. So kann beispielsweise mit Hilfe einer Gasflamme die Haftung auf Polyolefin-Substraten verbessert werden (sogenanntes Kreidl-Verfahren). Im Rahmen von industriellen Prozessen werden die Substrate in der Regel automatisch der Flamme für wenige Sekunden zugeführt. Wird jedoch die Prozesszeit nicht eingehalten oder eine falsche Prozesszeit gewählt, so kann es zu einer Überhitzung und im Falle von brennbaren Substraten, bswp. aus Kunststoff, zum Entzünden des Substrates kommen, was das Risiko eines Brandes in der entsprechenden Anlage birgt. Vor diesem Hintergrund offenbart die US 2021/039132 A1 eine Temperaturüberwachungseinheit für eine Substratbehandlungsanlage mit einer Beflammungsvorrichtung. Eine Transportvorrichtung transportiert Substratträger mit Substraten durch die Beflammungsvorrichtung. Eine Substratüberwachungseinheit erfasst nach Verlassen des Flammbereichs die Temperatur der Substrate. Eine Steuerungseinheit steuert die Beflammungsvorrichtung in Abhängigkeit von der Temperatur des Substrats.

Es ist daher eine Aufgabe der vorliegenden Erfindung, einen verbesserten Überwachungsmechanismus bereitzustellen, der das Auftreten eines Brands sicher unterbindet, ohne dass der entsprechende Prozess unnötig oft gestoppt würde oder werden müsste. Diese Aufgabe wird durch eine Substratbehandlungsanlage gemäß Anspruch 1 sowie ein Verfahren zum Beflammen von Substraten gemäß Anspruch 11 gelöst.

Im Wesentlichen liegt der vorliegenden Erfindung die Idee zugrunde, zwei Substratüberwachungseinheiten bereitzustellen, die unterschiedliche Verfahrensparameter überwachen, um so das Auftreten von Bränden effizient, wirkungsvoll und wenig störanfällig zu ermöglichen.

Die erfindungsgemäße Substratbehandlungsanlage weist eine Beflammunsgsvorrichtung zur Beflammung von Substraten in einem Flammbereich auf. Bei der Beflammunsgsvorrichtung kann es sich um eine beliebige, aus dem Stand der Technik bekannte Beflammunsgsvorrichtung handeln. Die Substratbehandlungsanlage weist ferner eine Transportvorrichtung zum Transportieren eines Substratträgers mit Substraten durch die Beflammunsgsvorrichtung auf. Die Transportvorrichtung kann dabei eine oder mehrere Transporteinheiten zum Transportieren des Substratträgers aufweisen. Beispielsweise kann eine erste Transporteinheit zum Transportieren des Substratträgers durch den Flammbereich und eine zweite Transporteinheit zum Weitertransport des Substratträgers nach dem Flammbereich vorgesehen sein. Die Transportvorrichtung kann auch weitere Transporteinheiten zum Transportieren des Substratträgers zur Beflammunsgsvorrichtung aufweisen.

Erfindungsgemäß ist eine erste Substratüberwachungseinheit vorgesehen, die dazu geeignet und eingerichtet ist, die Bewegung des Substratträgers durch die Beflammunsgsvorrichtung im Hinblick auf dessen Transportgeschwindigkeit und/oder dessen Verweildauer im Flammbereich zu überwachen. Ferner ist erfindungsgemäß eine zweite Substratüberwachungseinheit vorgesehen, die dazu geeignet und eingerichtet ist, die Substrate in dem Substratträger nach Verlassen des Flammbereichs im Hinblick auf deren Temperatur zu überwachen. Die Substratbehandlungsanlage weist ferner eine Steuerungseinheit auf, die dazu geeignet und eingerichtet ist, die Beflammungsvorrichtung und insbesondere deren Flamme abzuschalten, falls die erste Substratüberwachungseinheit eine zu kleine Transportgeschwindigkeit und/oder eine zu große Verweildauer eines Substratträgers im Flammbereich ermittelt. Die Steuerungseinheit ist ferner dazu geeignet und eingerichtet, den Transport der Substratträger durch die Beflammunsgsvorrichtung und insbesondere durch den Flammbereich anzuhalten, falls die zweite Substratüberwachungseinheit eine zu hohe Temperatur eines Substrats ermittelt.

Durch diese doppelte Überwachung werden eine Reihe von Vorteilen erzielt. Die erste Substratüberwachungseinheit erlaubt eine zugleich einfache und sichere Überwachung und wird im Regelfall vermeiden, dass Substrate überhaupt zu lange beziehungsweise zu hoch erhitzt werden, weil die Flamme abgestellt wird, bevor diese überhaupt zu lange auf die Substrate in dem Substratträger einwirken konnte. Da jedoch theoretisch dennoch ein Entzünden auftreten könnte (beispielsweise bei Fehlbeschickung mit Substraten eines niedrigeren Flammpunkts), soll durch die zweite Substratüberwachungseinheit sichergestellt werden, dass in jedem Fall Substrate mit zu hoher Temperatur identifiziert werden und deren Weitertransport in sensible Bereiche der Substratbehandlungsanlage (bspw. nachgelagerte Behandlungseinheiten zur Lackierung) sicher verhindert wird. Grundsätzlich wäre zwar auch eine Substratbehandlungsanlage mit lediglich der zweiten Substratüberwachungseinheit funktionsfähig. Allerdings hätte diese den Nachteil, dass häufiger ein Brand ausgelöst würde, was wegen der daraus resultierenden Konsequenzen (Auslösen eines Löschvorgangs etc.) nachteilig für den kontinuierlichen Betrieb der Substratbehandlungsanlage wäre. Das von der ersten Substratüberwachungseinheit ausgelöste kurzfristige Abschalten der Beflammunsgsvorrichtung ist diesbezüglich deutlich weniger problematisch, kann aber gegebenenfalls in bis zu 99 Prozent der Fälle das Auftreten eines Brandes vermeiden. Vor diesem Hintergrund ist die Kombination aus erster und zweiter Substratüberwachungseinheit besonders sicher und wirkungsvoll und minimiert gleichzeitig den Eingriff in den Prozessablauf soweit wie möglich.

Die erste Substratüberwachungseinheit weist bevorzugt mindestens zwei, stärker bevorzugt mindestens drei, Sensoren auf, die dazu geeignet und eingerichtet sind, an mindestens zwei, bevorzugt mindestens drei, Positionen in der Beflammunsgsvorrichtung jeweils die Präsenz eines Substratträgers zu detektieren. Da im Normalbetrieb von einer Bewegung der Substratträger mit konstanter Geschwindigkeit ausgegangen werden kann, reicht es grundsätzlich aus, beispielsweise den Zeitpunkt des Eintritts sowie des Austritts des Substratträgers in den bzw. aus dem Flammbereich zu kennen, um zu ermitteln, mit welcher Transportgeschwindigkeit der Substratträger durch den Flammbereich bewegt wurde. Wird der Substratträger nicht nach der üblichen Verweildauer beziehungsweise einer vorbestimmten Grenzzeit am Ende des Flammbereichs detektiert, so wird die Flamme abgeschaltet, um eine weitere Erhitzung der Substrate in dem Substratträger zu vermeiden. Im Hinblick auf ein möglichst redundantes System ist es dabei bevorzugt, mindestens drei Sensoren zu verwenden. Als Sensoren geeignet sind hierfür beispielsweise Lichttaster und Lichtschranken, z.B. Lichttaster und Lichtschranken aus der Modellreihe G2S (z.B. GTB2S-F5311) oder W2S-2 (GTB2S-F5311) vom Hersteller Sick AG.

Die zweite Substratüberwachungseinheit weist bevorzugt mindestens eine, stärker bevorzugt mindestens zwei, Temperaturmesseinheit(en) auf. Diese ist/sind bevorzugt dazu geeignet, die Temperatur der Substrate nach Verlassen des Flammbereichs mit einer Genauigkeit von +/- 10° Kelvin zu messen. Diese Messung soll bevorzugt innerhalb der Zeit erfolgen, in der die Substrate die jeweilige Temperaturmesseinheit passieren, das heißt üblicherweise innerhalb von wenigen Sekunden, sodass bevorzugt hier schnell reagierende Temperaturmesseinheiten wie beispielsweise Pyrometer zum Einsatz kommen können.

Das Anhalten des Transports der Substratträger durch die Beflammunsgsvorrichtung wird bevorzugt derart gesteuert, dass das Substrat mit zu hoher Temperatur (beziehungsweise der dieses enthaltende Substratträger) in einem definierten Bereich der Substratbehandlungsanlage angehalten wird. Zum einen soll dieser definierte Haltebereich in einem Teil der Substratbehandlungsanlage liegen, in dem ein womöglich brennendes Substrat einen minimalen Schaden anrichten kann, beispielsweise in einer feuerfesten Umgebung. Zum anderen ist es bevorzugt, dass die Substratbehandlungsanlage ferner einen Flammenmelder aufweist, der dazu geeignet ist, eine Flamme in ebendiesem definierten Bereich zu detektieren. Bei diesem Flammenmelder kann es sich beispielsweise um einen zugelassenen Feuermelder und/oder ein zugelassenes Brandüberwachungssystem handeln. Dieser zusätzliche Flammenmelder ist insoweit von Vorteil, als die zweite Substratüberwachungseinheit, wie oben ausgeführt, eine relativ rasche Temperaturmessung durchführen muss, welche fehleranfällig sein kann. Bevor jedoch beispielsweise ein Löschvorgang eingeleitet wird, sollte hinreichend sicher sein, dass tatsächlich Brandgefahr existiert beziehungsweise ein Substrat bereits brennt. Dies kann mit dem zusätzlichen Flammenmelder geleistet werden, der das Vorhandensein einer Flamme in dem definierten Bereich, in dem der Substratträger angehalten wurde, präzise ermittelt. Dieser Flammenmelder dient jedoch lediglich als weitere und bevorzugt amtlich zertifizierte Sicherungseinheit, die lediglich dann aktiviert wird, wenn die zweite Substratüberwachungseinheit zuvor eine zu hohe Temperatur eines Substrats ermittelt hat.

Die Steuerungseinheit ist ferner bevorzugt dazu geeignet und eingerichtet, einen manuellen Löschvorgang anzufordern und/oder einen automatischen Löschvorgang einzuleiten, falls der Flammenmelder eine Flamme in dem definierten Bereich detektiert. Beispielsweise kann ein akustischer oder optischer Feueralarm ausgelöst und/oder die Betätigung einer Feuerlöschanlage (z.B. Sprinkleranlage, CO2-Löschanlage, Inertgas-Löschanlage) durch die Steuereinheit ausgelöst werden.

Wie bereits erwähnt, kann die Transportvorrichtung eine erste Transporteinheit zum Transportieren der Substratträger mit einer ersten Geschwindigkeit durch die Beflammunsgsvorrichtung und einer zweiten Transporteinheit zum Weitertransport der Substrate mit einer zweiten Geschwindigkeit nach der Beflammunsgsvorrichtung oder deren Flammbereich aufweisen, wobei sich die erste und zweite Geschwindigkeit voneinander unterscheiden können. Dadurch lässt sich ein Substratträger hinter der Beflammunsgsvorrichtung anhalten (etwa in dem definierten Bereich, um eine Flamme zu detektieren), ohne dass die Weiterbestückung der Beflammunsgsvorrichtung unterbrochen werden müsste, da hierfür unterschiedliche Transporteinheiten zur Verfügung stehen. In diesem Fall ist die Steuerungseinheit insbesondere dazu geeignet und eingerichtet, die zweite Transporteinheit der Transportvorrichtung anzuhalten, falls die zweite Substratüberwachungseinheit eine zu hohe Temperatur eines Substrats ermittelt.

Die Steuerungseinheit ist ferner dazu geeignet und eingerichtet, die Beflammunsgsvorrichtung abzuschalten, falls die zweite Substratüberwachungseinheit eine zu hohe Temperatur eines Substrats ermittelt. Es ist ferner bevorzugt, dass die Steuerungseinheit dazu geeignet und eingerichtet ist, das Beladen der Beflammunsgsvorrichtung einzustellen, falls die zweite Substratüberwachungseinheit eine zu hohe Temperatur eines Substrats ermittelt. Bevorzugt erfolgt das Anhalten der Substratträger derart, dass die Beflammunsgsvorrichtung vor dem Anhalten noch entladen wird.

Die vorliegende Erfindung kann grundsätzlich in beliebigen Substratbehandlungsanlagen zum Einsatz kommen, welche einer Beflammunsgsvorrichtung bedürfen. Beispielsweise kann die Substratbehandlungsanlage ferner eine oder mehrere der folgenden Einheiten aufweisen: Lackiereinrichtung, Reinigungseinrichtung, insbesondere Bürstenreinigungseinrichtung, Beschichtungseinrichtung, insbesondere PVD- oder CVD-Beschichtungseinrichtung, Verklebungseinrichtung, Bedruckungseinrichtung.

Die vorliegende Erfindung richtet sich ferner auf ein Verfahren zum Beflammen von Substraten mittels der oben diskutierten Substratbehandlungsanlage, wobei das Verfahren die folgenden Schritte aufweist: kontinuierliches Transportieren mehrerer Substratträger durch die Beflammunsgsvorrichtung, wobei die Substrate eines jeden Substratträgers in der Beflammungsvorrichtung beflammt werden; Überwachen der Substratträger im Hinblick auf deren Transportgeschwindigkeit und/oder deren Verweildauer im Flammbereich der Beflammunsgsvorrichtung; Überwachen der Substrate nach Verlassen des Flammbereichs im Hinblick auf deren Temperatur; Abschalten der Beflammunsgsvorrichtung, falls eine zu kleine Transportgeschwindigkeit und/oder eine zu große Verweildauer eines Substratträgers in Flammbereich ermittelt wird; und Anhalten des Substratträger, falls eine zu hohe Temperatur eines Substrats nach Verlassen des Flammbereichs ermittelt wird. Bevorzugt erfolgt in einem definierten Bereich, in dem ein Substrat mit zu hoher Temperatur angehalten worden ist, eine Flammenmessung. Falls eine Flamme detektiert wird, wird bevorzugt ein manueller Löschvorgang angefordert und/oder ein automatischer Löschvorgang eingeleitet. Falls eine zu hohe Temperatur eines Substrats nach Verlassen des Flammbereichs ermittelt wird, wird bevorzug die Beflammunsgsvorrichtung und insbesondere deren Flamme abgeschaltet. Falls eine zu hohe Temperatur eines Substrats nach Verlassen des Flammbereich ermittelt wird, wird bevorzugt ferner das Beladen der Beflammunsgsvorrichtung eingestellt. Das Anhalten der Substratträger erfolgt bevorzugt derart, dass die Beflammunsgsvorrichtung vor dem Anhalten noch entladen wird. Die Substrate weisen bevorzugt Kunststoff, besonders bevorzugt Polyolefin, auf.

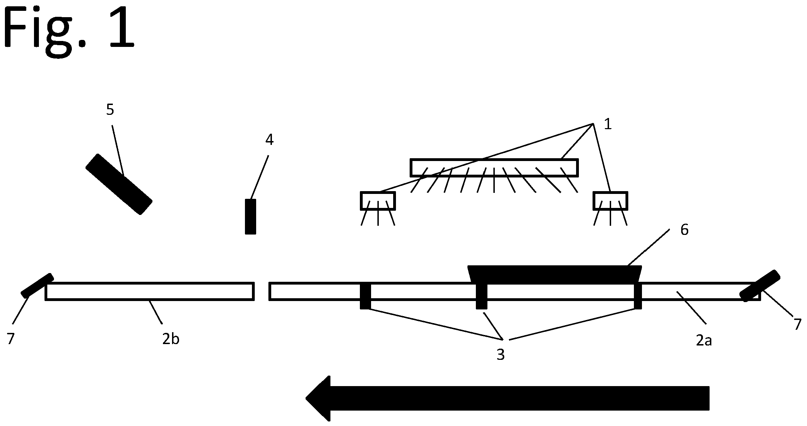

Nachfolgend wird ein besonders bevorzugtes Ausführungsbeispiel der vorliegenden Erfindung anhand der Figur 1 näher beschrieben.

Figur 1 zeigt schematisch eine Substratbehandlungsanlage mit einer Beflammunsgsvorrichtung 1 zur Beflammung von Substraten, die einen Flammbereich aufweist. Die in einem Substratträger 6 befindlichen Substrate werden mit Hilfe einer Transportvorrichtung durch die Beflammunsgsvorrichtung 1 transportiert. Die Transportvorrichtung weist im dargestellten Ausführungsbeispiel eine erste Transporteinheit 2a und eine zweite Transporteinheit 2b auf, deren Bewegungsrichtung durch den Pfeil angedeutet wird. Es ist ferner eine erste Substratüberwachungseinheit 3 vorgesehen, die dazu geeignet ist, die Bewegung des Substratträgers 6 durch die Beflammunsgsvorrichtung 1 im Hinblick auf dessen Transportgeschwindigkeit und/oder dessen Verweildauer im Flammbereich zu überwachen. Im dargestellten Ausführungsbeispiel weist die erste Substratüberwachungseinheit 3 drei Sensoren auf, die dazu geeignet sind an drei Positionen in der Beflammunsgsvorrichtung 1 jeweils die Präsenz des Substratträgers 6 zu detektieren. Hinter dem Flammbereich der Beflammunsgsvorrichtung ist eine zweite Substratüberwachungseinheit 4 vorgesehen, die dazu geeignet ist, die Substrate in dem Substratträger 6 nach Verlassen des Flammbereichs im Hinblick auf deren Temperatur zu überwachen. Falls die zweite Substratüberwachungseinheit 4, die im dargestellten Ausführungsbeispiel eine Temperaturmesseinheit aufweist, eine zu hohe Temperatur eines Substrats ermittelt, wird der Transport der Substratträger durch die Beflammunsgsvorrichtung 1 angehalten. Im dargestellten Ausführungsbeispiel geschieht dies dadurch, dass die zweite Transporteinheit 2b angehalten wird, wohingegen die erste Transporteinheit 2a der Transportvorrichtung grundsätzlich weiterbetrieben werden kann, sodass die Beflammung vorerst nicht unterbrochen werden muss. Das Anhalten des Substratträgers 6 auf der zweiten Transporteinheit 2b wird dabei derart gesteuert, dass das Substrat mit zu hoher Temperatur beziehungsweise der dieses enthaltende Substratträger in einem definierten Bereich der Substratbehandlungsanlage angehalten wird, sodass mit Hilfe des Flammenmelders 5 eine Flamme in diesem definierten Bereich detektiert werden kann. Detektiert der Flammenmelder 5 keine Flamme, kann der Betrieb der zweiten Transporteinheit 2b wieder aufgenommen werden. Andernfalls werden entsprechende Maßnahmen eingeleitet, beispielsweise ein manueller Löschvorgang angefordert oder ein automatischer Löschvorgang ausgelöst.

Am Anfang der ersten Transporteinheit 2a sowie am Ende der zweiten Transporteinheit 2b sind jeweils Stopper 7 vorgesehen.

## Patentansprüche

1. Substratbehandlungsanlage mit:
einer Beflammungsvorrichtung (1) zur Beflammung von Substraten, die einen Flammbereich aufweist;
einer Transportvorrichtung (2a, 2b) zum Transportieren eines Substratträgers (6) mit Substraten durch die Beflammungsvorrichtung (1);
einer ersten Substratüberwachungseinheit (3), die dazu geeignet ist, die Bewegung des Substratträgers (6) durch die Beflammungsvorrichtung (1) im Hinblick auf dessen Transportgeschwindigkeit und/oder dessen Verweildauer im Flammbereich zu überwachen;
einer zweiten Substratüberwachungseinheit (4), die dazu geeignet ist, die Substrate in dem Substratträger (6) nach Verlassen des Flammbereichs im Hinblick auf deren Temperatur zu überwachen; und
einer Steuerungseinheit,
i) die dazu eingerichtet ist, die Beflammungsvorrichtung (1) abzuschalten, falls die erste Substratüberwachungseinheit (3) eine zu kleine Transportgeschwindigkeit und/oder eine zu große Verweildauer eines Substratträgers (6) im Flammbereich ermittelt, und
ii) die dazu eingerichtet ist, den Transport der Substratträger (6) durch die Beflammungsvorrichtung (1) anzuhalten, falls die zweite Substratüberwachungseinheit (4) eine zu hohe Temperatur eines Substrats ermittelt.

2. Substratbehandlungsanlage nach Anspruch 1, wobei die erste Substratüberwachungseinheit (3) mindestens zwei, bevorzugt mindestens drei, Sensoren aufweist, die dazu geeignet sind, an mindestens zwei, bevorzugt mindestens drei, Positionen in der Beflammungsvorrichtung jeweils die Präsenz eines Substratträgers (6) zu detektieren.

3. Substratbehandlungsanlage nach Anspruch 1 oder 2, wobei die zweite Substratüberwachungseinheit (4) mindestens eine, bevorzugt mindestens zwei, Temperaturmesseinheit(en) aufweist,
wobei die Temperaturmesseinheit(en) bevorzugt dazu geeignet ist/sind, die Temperatur der Substrate nach Verlassen des Flammbereichs, bevorzugt innerhalb der Zeit, in der die Substrate die jeweilige Temperaturmesseinheit passieren, mit einer Genauigkeit von +/- 10° K zu messen.

4. Substratbehandlungsanlage nach einem der vorigen Ansprüche, wobei das Anhalten der Substratträger (6) derart gesteuert wird, dass das Substrat mit zu hoher Temperatur in einem definierten Bereich der Substratbehandlungsanlage angehalten wird.

5. Substratbehandlungsanlage nach Anspruch 4, wobei die Substratbehandlungsanlage ferner einen Flammenmelder (5) aufweist, der dazu geeignet ist, eine Flamme in dem definierten Bereich zu detektieren.

6. Substratbehandlungsanlage nach Ansprch 5, wobei die Steuerungseinheit dazu geeignet ist, einen manuellen Löschvorgang anzufordern und/oder einen automatischen Löschvorgang einzuleiten, falls der Flammenmelder eine Flamme in dem definierten Bereich detektiert.

7. Substratbehandlungsanlage nach einem der vorigen Ansprüche, wobei die Transportvorrichtung eine erste Transporteinheit (2a) zum Transportieren der Substratträger (6) mit einer ersten Geschwindigkeit durch den Flammbereich (1) und einer zweiten Transporteinheit (2b) zum Weitertransport der Substratträger mit einer zweiten Geschwindigkeit nach dem Flammbreich aufweist.

8. Substratbehandlungsanlage nach einem der vorigen Ansprüche, wobei die Steuerungseinheit ferner dazu geeignet ist, die Beflammungsvorrichtung (1) abzuschalten, falls die zweite Substratüberwachungseinheit (4) eine zu hohe Temperatur eines Substrats ermittelt.

9. Substratbehandlungsanlage nach einem der vorigen Ansprüche, wobei die Steuerungseinheit ferner dazu geeignet ist, das Beladen der Beflammungsvorrichtung (1) einzustellen, falls die zweite Substratüberwachungseinheit (4) eine zu hohe Temperatur eines Substrats ermittelt.

10. Substratbehandlungsanlage nach einem der vorigen Ansprüche, wobei das Anhalten der Substratträger im Schritt ii) derart erfolgt, dass die Beflammungsvorrichtung (1) vor dem Anhalten noch entladen wird.

11. Verfahren zum Beflammen von Substraten mittels der Substratbehandlungsanlage nach einem der vorigen Ansprüche, wobei das Verfahren die folgenden Schritte aufweist:
Kontinuierliches Transportieren mehrerer Substratträger durch die Beflammungsvorrichtung (1), wobei die Substrate eines jeden Substratträgers (6) in der Beflammungsvorrichtung (1) beflammt werden;
Überwachen der Substratträger (6) im Hinblick auf deren Transportgeschwindigkeit und/oder deren Verweildauer im Flammbereich der Beflammungsvorrichtung (1);
Überwachen der Substrate nach Verlassen des Flammbereichs im Hinblick auf deren Temperatur;
Abschalten der Beflammungsvorrichtung (1), falls eine zu kleine Transportgeschwindigkeit und/oder eine zu große Verweildauer eines Substratträgers (6) im Flammbereich ermittelt wird; und
Anhalten der Substratträger (6), falls eine zu hohe Temperatur eines Substrats nach Verlassen des Flammbereichs ermittelt wird.

12. Verfahren nach Anspruch 11, wobei das Verfahren ferner aufweist:
Flammenmessung/Flammenerkennung in einem definierten Bereich, in dem ein Substrat mit zu hoher Temperatur angehalten worden ist,
wobei das Verfahren bevorzugt ferner aufweist: Anfordern eines manuellen Löschvorgangs und/oder Einleiten eines automatischen Löschvorgangs, falls eine Flamme detektiert wird.

13. Verfahren nach einem der Ansprüche 11 bis 12, wobei das Verfahren ferner aufweist: Abschalten der Beflammungsvorrichtung (1), falls eine zu hohe Temperatur eines Substrats nach Verlassen des Flammbereichs ermittelt wird.

14. Verfahren nach einem der Ansprüche 11 bis 13, wobei das Verfahren ferner aufweist: Einstellen des Beladens der Beflammungsvorrichtung (1), falls eine zu hohe Temperatur eines Substrats nach Verlassen des Flammbereichs ermittelt wird.

15. Verfahren nach einem der Ansprüche 11 bis 14, wobei das Anhalten der Substratträger (6) derart erfolgt, dass die Beflammungsvorrichtung vor dem Anhalten noch entladen wird.

## Claims

1. A substrate treatment system comprising:
a flame treatment device (1) for flame treating substrates comprising a flame zone;
a transport device (2a, 2b) for transporting a substrate carrier (6) with substrates through the flame treatment device (1);
a first substrate monitoring unit (3) which is suited to monitor the movement of the substrate carrier (6) through the flame treatment device (1) with respect to its transport speed and/or its dwell time in the flame zone;
a second substrate monitoring unit (4) which is suited to monitor the substrates in the substrate carrier (6) with respect to their temperature after they exit the flame zone; and
a control unit,
i) which is adapted to switch off the flame treatment device (1) if the first substrate monitoring unit (3) detects too low a transport speed and/or too long a dwell time of a substrate carrier (6) in the flame zone, and
ii) which is adapted to stop the transport of the substrate carriers (6) through the flame treatment device (1) if the second substrate monitoring unit (4) detects that the temperature of a substrate is too high.

2. The substrate treatment system of claim 1, wherein the first substrate monitoring unit (3) comprises at least two, preferably at least three sensors, which are suited to detect the presence of a substrate carrier (6) at at least two, preferably at least three positions in the flame treatment device.

3. The substrate treatment system of claim 1 or 2, wherein the second substrate monitoring unit (4) comprises at least one, preferably at least two temperature measuring unit(s), wherein the temperature measuring unit(s) is/are preferably suited to measure the temperature of the substrates after they exit the flame zone, preferably within the time period in which the substrates pass the relevant temperature measuring unit, with an accuracy of +/- 10° K.

4. The substrate treatment system of any one of the preceding claims, wherein stopping the substrate carriers (6) is controlled in such a way that the substrate showing too high a temperature is stopped within a defined area of the substrate treatment system.

5. The substrate treatment system of claim 4, wherein the substrate treatment system further comprises a flame detector (5) which is suited to detect a flame in the defined area.

6. The substrate treatment system of claim5, wherein the control unit is suited to request a manual fire extinguishing process and/or to initiate an automatic fire extinguishing process if the flame detector detects a flame in the defined area.

7. The substrate treatment system of any one of the preceding claims, wherein the transport device comprises a first transport unit (2a) for transporting the substrate carriers (6) at a first speed through the flame zone (1) and a second transport unit (2b) for transporting the substrate carriers onward at a second speed after they pass the flame zone.

8. The substrate treatment system of any one of the preceding claims, wherein the control unit is further suited to switch off the flame treatment device (1) if the second substrate monitoring unit (4) detects that the temperature of a substrate is too high.

9. The substrate treatment system of any one of the preceding claims, wherein the control unit is further suited to stop the loading of the flame treatment system (1) if the second substrate monitoring unit (4) detects that the temperature of a substrate is too high.

10. The substrate treatment system of any one of the preceding claims, wherein stopping the substrate carriers in step ii) takes place in such a way that the flame treatment system (1) is unloaded before the substrate carriers are stopped.

11. A method for flame treating substrates by means of the substrate treatment system of any one of the preceding claims wherein the method comprises the following steps:
continuous transport of a number of substrate carriers through the flame treatment device (1), wherein the substrates of each of the substrate carriers (6) are flame treated in the flame treatment device (1);
monitoring the substrate carriers (6) with respect to their transport speed and/or their dwell time in the flame zone of the flame treatment device (1);
monitoring the substrates with respect to their temperature after they exit the flame zone;
switching off the flame treatment device (1) if it is detected that a substrate carrier (6) shows too low a transport speed and/or too long a dwell time in the flame zone; and
stopping the substrate carriers (6) if it is detected that the temperature of a substrate is too high after it exits the flame zone.

12. The method of claim 11, wherein the method further comprises: flame measuring/flame detection in a defined area in which a substrate showing too high a temperature is stopped, wherein the method preferably further comprises: requesting a manual fire extinguishing process and/or initiating an automatic fire extinguishing process if a flame is detected.

13. The method of any of claims 11 to 12, wherein the method further comprises: switching off the flame treatment device (1) if it is detected that the temperature of a substrate is too high after it exits the flame zone.

14. The method of any of claims 11 to 13, wherein the method further comprises: stopping the loading of the flame treatment device (1) if it is detected that the temperature of a substrate is too high after it exits the flame zone.

15. The method of any of claims 11 to 14, wherein stopping the substrate carriers (6) takes place in such a way that the flame treatment device is unloaded before the substrate carriers are stopped.

## Revendications

1. Installation de traitement de substrats comprenant :
un dispositif de traitement à la flamme (1) pour le traitement à la flamme de substrats, qui présente une zone de flammes ;
un dispositif de transport (2a, 2b) pour transporter un support de substrats (6) avec des substrats à travers le dispositif de traitement à la flamme (1) ;
une première unité de surveillance de substrats (3), qui est apte à surveiller le mouvement du support de substrats (6) à travers le dispositif de traitement à la flamme (1) en ce qui concerne sa vitesse de transport et/ou son temps de séjour dans la zone de flammes ;
une deuxième unité de surveillance de substrats (4), qui est apte à surveiller les substrats dans le support de substrats (6) après le départ de la zone de flammes en ce qui concerne leur température ; et une unité de commande,
i) qui est conçue pour arrêter le dispositif de traitement à la flamme (1) si la première unité de surveillance de substrats (3) détermine une vitesse de transport trop faible et/ou un temps de séjour trop important d'un support de substrats (6) dans la zone de flammes, et
ii) qui est conçue pour arrêter le transport des supports de substrats (6) à travers le dispositif de traitement à la flamme (1) si la deuxième unité de surveillance de substrats (4) détermine une température trop élevée d'un substrat.

2. Installation de traitement de substrats selon la revendication 1, dans laquelle la première unité de surveillance de substrats (3) comporte au moins deux, de préférence au moins trois, capteurs aptes à détecter respectivement la présence d'un support de substrats (6) en au moins deux, de préférence au moins trois, positions dans le dispositif de traitement à la flamme.

3. Installation de traitement de substrats selon la revendication 1 ou 2, dans laquelle la deuxième unité de surveillance de substrats (4) comporte au moins une, de préférence au moins deux, unité(s) de mesure de température, la ou les unité(s) de mesure de température étant de préférence aptes à mesurer la température des substrats après le départ de la zone de flammes, de préférence pendant le temps où les substrats passent par l'unité de mesure de température respective, avec une précision de +/- 10° K.

4. Installation de traitement de substrats selon l'une des revendications précédentes, dans laquelle l'arrêt des supports de substrats (6) est commandé de manière à arrêter le substrat présentant une température trop élevée dans une zone définie de l'installation de traitement de substrats.

5. Installation de traitement de substrats selon la revendication 4, dans laquelle l'installation de traitement de substrats comprend en outre un détecteur de flamme (5) apte à détecter une flamme dans la zone définie.

6. Installation de traitement de substrats selon la revendication 5, dans laquelle l'unité de commande est apte à demander une opération d'extinction manuelle et/ou à déclencher une opération d'extinction automatique si le détecteur de flamme détecte une flamme dans la zone définie.

7. Installation de traitement de substrats selon l'une des revendications précédentes, dans laquelle le dispositif de transport comprend une première unité de transport (2a) pour transporter les supports de substrats (6) à une première vitesse à travers la zone de flammes (1) et une deuxième unité de transport (2b) pour continuer à transporter les supports de substrats à une deuxième vitesse après la zone de flammes.

8. Installation de traitement de substrats selon l'une des revendications précédentes, dans laquelle l'unité de commande est en outre apte à arrêter le dispositif de traitement à la flamme (1) si la deuxième unité de surveillance de substrats (4) détecte une température trop élevée d'un substrat.

9. Installation de traitement de substrats selon l'une des revendications précédentes, dans laquelle l'unité de commande est en outre apte à arrêter le chargement du dispositif de traitement à la flamme (1) si la deuxième unité de surveillance de substrats (4) détecte une température trop élevée d'un substrat.

10. Installation de traitement de substrats selon l'une des revendications précédentes, dans laquelle l'arrêt des supports de substrats à l'étape ii) est effectué de telle sorte que le dispositif de traitement à la flamme (1) est encore déchargé avant l'arrêt.

11. Procédé de traitement à la flamme de substrats au moyen de l'installation de traitement de substrats selon l'une des revendications précédentes, le procédé comprenant les étapes suivantes :
le transport en continu de plusieurs supports de substrats à travers le dispositif de traitement à la flamme (1), les substrats de chaque support de substrats (6) étant exposés à la flamme dans le dispositif de traitement à la flamme (1) ;
la surveillance des supports de substrats (6) en ce qui concerne leur vitesse de transport et/ou leur durée de séjour dans la zone de flammes du dispositif de traitement à la flamme (1) ;
la surveillance des substrats après le départ de la zone de flammes en ce qui concerne leur température ;
l'arrêt du dispositif de traitement à la flamme (1) si une vitesse de transport trop faible et/ou un temps de séjour trop important d'un support de substrats (6) sont déterminés dans la zone de flammes ; et
l'arrêt des supports de substrats (6) si une température trop élevée d'un substrat est déterminée après le départ de la zone de flamme.

12. Procédé selon la revendication 11, le procédé comprenant en outre : la mesure/détection de flammes dans une zone définie dans laquelle un substrat à température trop élevée a été arrêté, le procédé comprenant de préférence en outre : la demande d'une opération d'extinction manuelle et/ou le lancement d'une opération d'extinction automatique si une flamme est détectée.

13. Procédé selon l'une des revendications 11 et 12, le procédé comprenant en outre : l'arrêt du dispositif de traitement à la flamme (1) si une température trop élevée d'un substrat est détectée après le départ de la zone de flammes.

14. Procédé selon l'une quelconque des revendications 11 à 13, le procédé comprenant en outre : l'arrêt de la charge du dispositif de traitement à la flamme (1) si une température trop élevée d'un substrat est détectée après le départ de la zone de flammes.

15. Procédé selon l'une des revendications 11 à 14, dans lequel l'arrêt des supports de substrats (6) est réalisé de telle sorte que le dispositif de traitement à la flamme est encore déchargé avant l'arrêt.
